# EUROPÄISCHE PATENTANMELDUNG

(11) **EP 1 336 386 A1**
(43) Veröffentlichungstag der Anmeldung: **20.08.2003**
(21) Anmeldenummer: 03001480.7
(22) Anmeldetag: 23.01.2003
(51) Int. Cl.: A61C 5/06, B65D 77/24, B65D 75/58

(54) **Single-Dose Verpackung für Flüssigkeiten**

(30) Priorität: 18.02.2002 DE 10206870
(71) Anmelder: Heraeus Kulzer GmbH & Co.KG, 63450 Hanau (DE)
(72) Erfinder: Bressler, Christian, 60385 Frankfurt (DE); Balkenhol, Markus, Dr., 35440 Linden (DE)
(74) Vertreter: Kühn, Hans-Christian

(57) **Zusammenfassung**

Single-Dose Verpackung für Flüssigkeiten, im wesentlichen bestehend aus
a) einer Karte (1) mit mindestens einer geraden Seite, aufweisend
   eine gerade Sollknicklinie (5), im wesentlichen parallel zur geraden Seite der Karte,
   eine ausgesparte Lasche (4) im Bereich der Sollknicklinie, die nach dem Knicken aus einer Kartenebene heraussteht,
b) einem Flüssigkeitsbehälter (8), der an der Unterseite im Bereich der Sollknicklinie (5) angebracht ist und der so verschlossen ist, dass er bei der Knickbewegung geöffnet wird, und der Inhalt zugänglich ist,
wobei an der Karte (1) ein Pinsel- oder Microbrush-Teil (2) so angebracht ist, dass der Pinsel oder Microbrush beim Öffnen in die Flüssigkeit eintaucht.

## Beschreibung

Die Erfindung betrifft eine Verpackung für einzelne Dosen eines flüssigen Materials in Form einer Karte, die durch Knicken in ein standfähiges Darreichungsgefäß umgewandelt werden kann und den Inhalt eines Flüssigkeitsbehälters zur Entnahme freigibt.

Flüssige Dentalmaterialien werden oft mit Entnahme- bzw. Applikationsinstrumenten wie Pinseln oder Bürsten (z.B. einem sogenannten "Microbrush®") auf die zu behandelnden Zähne aufgebracht. Dabei kommt es darauf an, dass die Handhabung einfach ist und dass die Flüssigkeit möglichst mit einer Hand entnommen und aufgebracht werden kann. Dies stellt weniger ein Problem dar, wenn das Material aus Flaschen zu entnehmen ist. Häufig werden Dentalmaterialien aber in sogenannten "Single Dose" Verpackungen angeboten, bei denen jeweils eine Portion frisch geöffnet wird, wobei die weiteren Portionen gegen Verderben oder Kontaminerung geschützt sind. Solche kleinen Verpackungen müssen gewöhnlich entweder in geeignete Ständer abgestellt werden oder mit zwei Händen manipuliert werden. Bekannt sind aus AT 344 079 eine Knickverpackung, mit der Flüssigkeit ausgequetscht wird, sowie eine Anordnung mit eingebautem Microbrush, welche aber keine Knickfunktion aufweist (EP 770 021).

Es stellt sich die Aufgabe, eine Verpackung mit integriertem Applikationsinstrument zu entwickeln, die durch Knicken in ein standfestes Gefäß umgewandelt wird.

Es wurde eine Single-Dose-Verpackung gefunden, im wesentlichen bestehend aus:
a einer Karte mit mindestens einer geraden Seite, aufweisend:
   eine gerade Sollknicklinie, im wesentlichen parallel zur geraden Seite der Karte,
   eine ausgesparte Lasche im Bereich der Sollknicklinie, die nach dem Knicken aus einer Kartenebene heraussteht,
   b einem Flüssigkeitsbehälter, der an der Unterseite im Bereich der Sollknicklinie angebracht ist und der so verschlossen ist, dass er bei der Knickbewegung geöffnet wird, und der Inhalt zugänglich ist,
dadurch gekennzeichnet, dass an der Karte (1) ein Pinsel- oder Microbrush-Teil (2) so angebracht ist, dass der Pinsel oder Microbrush beim Öffnen in die Flüssigkeit eintaucht.

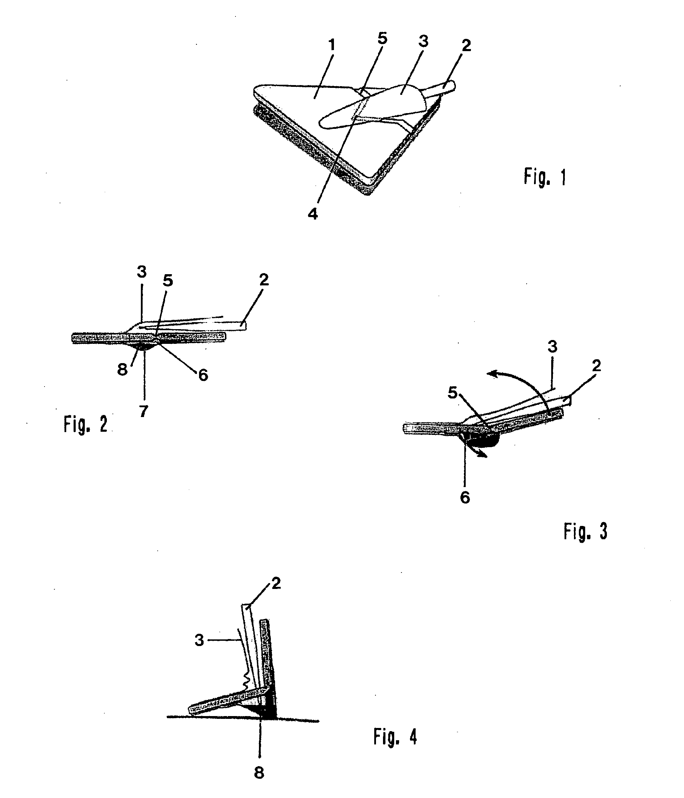

In der Regel ist der Flüssigkeitsbehälter so mit einer Folie verschlossen, dass bei der Knickbewegung die Folie abgezogen oder durchbrochen wird, und der Inhalt für den Pinsel oder Microbrush zugänglich ist. Vorzugsweise ist lediglich die Spitze eines Microbrushs leicht entfernbar an der Verpackung angebracht, die dann mit einem Griff verbunden und gehandhabt werden kann (diese Ausführungsform ist in den weiter unten beschriebenen Figuren 3 und 4 dargestellt). Es kann aber auch vorgesehen sein, dass der entsprechende Microbrush im Ganzen an der Verpackung leicht entfernbar angebracht ist. Dies ist etwa abhängig von der gewählten Gesamtgröße der Verpackung oder vom beabsichtigten Anwenderkomfort.

Nach öffnen der Verpackung durch Knicken kann das Microbrush- oder Pinsel-Teil in benetztem Zustand von der Verpackung entfernt werden.

Die Verpackung besteht in der Hauptsache aus der Karte, vorzugsweise aus einem Kunststoff, und dem Flüssigkeitsbehälter. Die Karte kann verschiedene geometrische Formen mit einer geraden Seite aufweisen, beispielsweise die eines Dreiecks oder eines Trapezes. Bewährt hat sich die Dreiecksform. Die Karte ist parallel zur geraden Seite entlang einer geraden Sollknicklinie abknickbar. Dies kann beispielsweise durch eine einseitig oder an beiden Seiten angebrachte Kerbe bewerkstelligt werden. Durch das Abknicken nach oben wird die ausgesparte Lasche aus der Ebene gedrückt und weist bevorzugt nach unten, so dass die Verpackung auf der geraden Seite und der Lasche steht. Diese ist vorzugsweise in V-Form im Bereich der Mitte der Sollknicklinie ausgestanzt. Es ist aber auch möglich, eine andere Form, beispielsweise eine U-Form oder rechteckige Form zu wählen. Beim Abknicken wird ferner der Flüssigkeitsbehälter geöffnet. Dies kann so gelöst sein, das entlang der Sollknicklinie ein Dorn (_^_) oder eine Lasche (_∩_) vorgesehen sind, welche die darüber angebrachte Folie beim Knicken aufhebeln bzw. aufstoßen (vgl. Fig. 3). Selbstverständlich kann die Folie auch mit einem ausreichend langen Überstand versehen sein, der von Hand abgezogen werden kann. Es ist auch möglich, dass die Zugkraft, die beim Abknicken auf die Abdeckfolie des Flüssigkeitsbehälters ausgeübt wird, zum Öffnen genutzt wird. Ferner ist vorgesehen, dass die Karte im geknickten Zustand verharrt, beispielsweise durch einen Einrastmechanismus, und auf der geraden Kante und der Lasche aufgestellt werden kann. Der Flüssigkeitsbehälter ist rückseitig vorzugsweise durch eine Aluminiumfolie vor Beschädigung geschützt.

Im Anlieferungszustand der Einmal-Verpackung ist der Flüssigkeitsbehälter (Tank) verschlossen. Zur Anwendung wird die Karte an der Sollknickstelle abgeknickt. Durch das Abknicken werden folgende Funktionen ausgelöst:
- Der Tank wird geöffnet
- Die Einmal-Verpackung wird so stark abgewinkelt, dass die Lasche nach unten freigegeben wird und die aktivierte Einmal-Anwendung steht.
- Am Boden der Entnahmeöffnung liegt Produkt aus dem geöffneten Tank zur Applikation vor.
- Das Bürstenteil des Microbrushs taucht nach dem Abknicken in die Flüssigkeit.

Der Materialbehälter (Tank) kann beispielsweise wie folgt ausgeführt sein:
a) Der Tank wird gebildet durch das Kunststoffteil (Karte), in dem eine ausgesparte Öffnung der Karte eine Flüssigkeit aufnehmen kann. Verschlossen wird diese Öffnung durch eine Folie oder
b) durch ein weiteres Kunststoffteil in der Art eines Deckels.
   Vorteilhaft sind bei a) und b) die Folie oder der Deckel so mit der Karte verbunden, dass sie beim Knicken geöffnet werden.
c) Der Tank wird gebildet durch eine Aussparung in der Karte zur Aufnahme des Materials und auf beiden Seiten mit Folie versiegelt.
   Im Fall c) ist es wiederum zweckmäßig, wenn eine der beiden Siegelfolien so mit der Karte verbunden wird, dass sich beim Knicken der Tank öffnet.
d) Der Tank wird durch zwei Folien gebildet, die am Rand gesiegelt sind (dem Fachmann als 4-Randsiegelbeutel bekannt) oder durch
e) eine Folie, die an 3 Rändern gesiegelt ist (3-Randsiegelbeutel).
   Im Fall der Siegelrandbeutel d) und e) wird die Öffnungsmöglichkeit zweckmäßig so vorgesehen, dass entlang der Versiegelung beim Knicken ein Teil der Beutel deckelartig abgezogen wird.

Die Erfindung wird durch die im folgenden beschriebene Abbildung näher erläutert, ohne sie auf diese Ausführungsform zu beschränken:
- Fig. 1: zeigt eine schräge Draufsicht des Anlieferungszustands der Verpackung,
- Fig. 2: zeigt die Verpackung im selben Zustand im Querschnitt,
- Fig. 3: zeigt den Zustand beim Beginn der Knickbewegung und
- Fig. 4: zeigt den geknickten Zustand, bei dem die Verpackung steht.

In Fig. 1 ist der Anlieferungszustand zu sehen. Ein Microbrush-Teil **2** ist in einer Folienhülle **3** an der Oberseite der Karte **1** angebracht. Gestrichelt ist die Ausnehmung für die V-förmige Lasche **4** zu erkennen, der als Standfuß dient. Die Sollknicklinie ist als Kerbe **5** zu sehen.

Fig. 2 zeigt den Querschnitt. Die Sollknicklinie **5** ist durch Kerben an der Ober und Unterseite ausgeführt. Unten in Schwarz sieht man den Flüssigkeitstank **8**, der unten durch eine Folie **7** geschützt ist. Oben am Tank ist eine dünne Dichtungsfolie **6** gezeigt.

Fig. 3 zeigt den Knickvorgang entlang der Line **5**, bei dem die Dichtungsfolie **6** durchtrennt oder abgezogen wird.

Fig. 4 zeigt, wie die Vorrichtung in geknicktem Zustand aufgestellt ist, und wie das Bürstenteil des Microbrushs bereits in der Flüssigkeit eingetaucht ist, fertig zur Entnahme der Flüssigkeit. An dem Microbrush-Teil **2** wird anschließen ein Griff befestigt, der nicht gezeigt ist.

Vorzugsweise wird die im vorliegenden beschriebene Verpackung für Dentalmaterialien eingesetzt.

## Patentansprüche

1. Single-Dose Verpackung für Flüssigkeiten, im wesentlichen bestehend aus
a einer Karte (1) mit mindestens einer geraden Seite, aufweisend
eine gerade Sollknicklinie (5), im wesentlichen parallel zur geraden Seite der Karte,
eine ausgesparte Lasche (4) im Bereich der Sollknicklinie, die nach dem Knicken aus einer Kartenebene nach unten heraussteht,
b einem Flüssigkeitsbehälter (8), der an der Unterseite im Bereich der Sollknicklinie (5) angebracht ist und der so verschlossen ist, dass er bei der Knickbewegung geöffnet wird, und der Inhalt zugänglich ist
**dadurch gekennzeichnet, dass** an der Karte (1) ein Pinsel oder Microbrush (2) so angebracht ist, dass der Pinsel oder Microbrush beim Öffnen in die Flüssigkeit eintaucht.

2. Verpackung nach Anspruch 1, **dadurch gekennzeichnet, dass** der Flüssigkeitsbehälter so mit einer Folie (6) verschlossen ist, dass bei der Knickbewegung die Folie abgezogen oder durchtrennt wird, und der Inhalt zugänglich ist.

3. Verpackung nach Anspruch 1, **dadurch gekennzeichnet, dass** die Karte Dreiecksform besitzt.

4. Verpackung nach Anspruch 1, **dadurch gekennzeichnet, dass** entlang der geraden Sollknicklinie eine Kerbe einseitig angebracht ist.

5. Verpackung nach Anspruch 1, **dadurch gekennzeichnet, dass** entlang der geraden Sollknicklinie beidseitig Kerben angebracht sind.
